# EUROPEAN PATENT APPLICATION

(11) **EP 4 682 868 A1**
(43) Date of publication of application: **21.01.2026**
(21) Application number: 25202965.7
(22) Date of filing: 18.09.2025
(51) Int. Cl.: G10L 15/22, G10L 13/027, G10L 13/047, G10L 15/16, G10L 15/06, G10L 15/18, G10L 15/183, G06F 40/30

(54) **INTERACTIVE METHOD AND APPARATUS BASED ON LARGE MODEL, TRAINING METHOD AND APPARATUS, INTELLIGENT AGENT, DEVICE,MEDIUM, AND PROGRAM PRODUCT**

(30) Priority: 30.12.2024 CN 202411979564
(71) Applicant: Beijing Baidu Netcom Science Technology Co., Ltd., Beijing 100085 (CN)
(72) Inventor: PENG, Xingyuan, Beijing 100085 (CN); DENG, Aiwen, Beijing 100085 (CN); JIANG, Zhengxiang, Beijing 100085 (CN); XU, Yangkai, Beijing 100085 (CN); LIU, Chaorun, Beijing 100085 (CN); SHI, Letong, Beijing 100085 (CN); CONG, Shijun, Beijing 100085 (CN); DING, Jupeng, Beijing 100085 (CN); WANG, Guibin, Beijing 100085 (CN); LI, Xiaohui, Beijing 100085 (CN); FU, Xiaoyin, Beijing 100085 (CN); JIA, Lei, Beijing 100085 (CN); WANG, Haifeng, Beijing 100085 (CN)
(74) Representative: Schenk, Markus

(57) **Abstract**

An interactive method and apparatus based on a large model, a training method and apparatus, an intelligent agent, an electronic device, a storage medium, and a program product, which relate to the field of artificial intelligence, particularly in the technical fields such as speech recognition, speech interaction, deep learning, and large models, and may be applied to application scenarios such as knowledge search, autonomous driving, intelligent customer service, intelligent speech control, smart e-commerce, and AI healthcare, are provided. The interactive method based on the large model includes: acquiring a request speech; performing a speech recognition on the request speech to obtain a speech recognition feature representing a request semantics; and processing the speech recognition feature using the large model to obtain a response text, where the response text includes a plurality of response words arranged in sequence, a target response word among the plurality of response words is determined by processing the speech recognition feature and an associated response word feature using an attention fusion layer of the large model, and the associated response word feature is related to an associated response word arranged before the target response word.

## Description

### TECHNICAL FIELD

The present disclosure relates to a field of artificial intelligence, and in particular to technical fields such as speech recognition, speech interaction, deep learning, and large models, which may be applied to application scenarios such as knowledge search, autonomous driving, intelligent customer service, intelligent speech control, smart e-commerce, and AI healthcare. And more specifically, the present disclosure relates to an interactive method and apparatus based on a large model, a training method and apparatus, an intelligent agent, an electronic device, a storage medium, and a program product.

### BACKGROUND

With the rapid development of artificial intelligence technology, multimodal information such as text, speech, and video input from users may be processed based on Artificial Intelligence Generated Content (AIGC) technology in the human-computer interaction, so as to generate the information that users need to know.

### SUMMARY

The present disclosure provides an interactive method and apparatus based on a large model, a training method and apparatus, an intelligent agent, an electronic device, a storage medium, and a program product.

According to an aspect of the present disclosure, an interactive method based on a large model is provided, including: acquiring a request speech; performing a speech recognition on the request speech to obtain a speech recognition feature representing a request semantics; and processing the speech recognition feature using the large model to obtain a response text, where the response text includes a plurality of response words arranged in sequence, a target response word among the plurality of response words is determined by processing the speech recognition feature and an associated response word feature using an attention fusion layer of the large model, and the associated response word feature is related to an associated response word arranged before the target response word.

According to another aspect of the present disclosure, a method of training a large model is provided, including: acquiring a sample request speech and a label response text; performing a speech recognition on the sample request speech to obtain a sample speech recognition feature; processing the sample speech recognition feature using an initial large model to obtain a sample response text, where the sample response text includes a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word; and training the initial large model based on a response text difference between the sample response text and the label response text to obtain a trained large model.

According to another aspect of the present disclosure, an interactive apparatus based on a large model is provided, including: a first acquisition module configured to acquire a request speech; a first speech recognition module configured to perform a speech recognition on the request speech to obtain a speech recognition feature representing a request semantics; and a response text obtaining module configured to process the speech recognition feature using the large model to obtain a response text, where the response text includes a plurality of response words arranged in sequence, a target response word among the plurality of response words is determined by processing the speech recognition feature and an associated response word feature using an attention fusion layer of the large model, and the associated response word feature is related to an associated response word arranged before the target response word.

According to another aspect of the present disclosure, an apparatus of training a large model is provided, including: a second acquisition module configured to acquire a sample request speech and a label response text; a second speech recognition module configured to perform a speech recognition on the sample request speech to obtain a sample speech recognition feature; a sample response text obtaining module configured to process the sample speech recognition feature using an initial large model to obtain a sample response text, where the sample response text includes a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word; and a training module configured to train the initial large model based on a response text difference between the sample response text and the label response text to obtain a trained large model.

According to another aspect of the present disclosure, an intelligent agent is provided, including: an input module configured to receive input information; a processing module configured to determine a target task based on the input information received by the input module, determine a large model or an initial large model based on the target task, and call the large model to execute the interactive method based on the large model provided by embodiments of the present disclosure or call the initial large model to execute the method of training the large model provided by embodiments of the present disclosure, so as to obtain output information; and an output module configured to output the output information obtained by the processing module.

According to another aspect of the present disclosure, an electronic device is provided, including: at least one processor; and a memory communicatively connected to the at least one processor, where the memory stores instructions executable by the at least one processor, and the instructions, when executed by the at least one processor, are used to cause the at least one processor to implement the method provided by embodiments of the present disclosure.

According to another aspect of the present disclosure, a non-transitory computer-readable storage medium having computer instructions stored thereon is provided, where the computer instructions are configured to cause a computer to implement the method provided by embodiments of the present disclosure.

According to another aspect of the present disclosure, a computer program product containing a computer program is provided, where the computer program, when executed by a processor, causes the processor to implement the method provided by embodiments of the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to understand the present disclosure better and do not constitute a limitation to the present disclosure, in which:
FIG. 1 schematically shows an exemplary system architecture that implements an interactive method and apparatus based on a large model according to embodiments of the present disclosure;
FIG. 2 schematically shows a flowchart of an interactive method based on a large model according to embodiments of the present disclosure;
FIG. 3 schematically shows an application scenario diagram of an interactive method based on a large model according to embodiments of the present disclosure;
FIG. 4 schematically shows an application scenario diagram of an interactive method based on a large model according to another embodiment of the present disclosure;
FIG. 5A schematically shows a flowchart of a method of training a large model according to embodiments of the present disclosure;
FIG. 5B schematically shows a principle diagram of determining an initial large model according to embodiments of the present disclosure;
FIG. 6 schematically shows a principle diagram of a method of training a large model according to embodiments of the present disclosure;
FIG. 7 schematically shows a block diagram of an interactive apparatus based on a large model according to embodiments of the present disclosure;
FIG. 8 schematically shows a block diagram of an apparatus of training a large model according to embodiments of the present disclosure;
FIG. 9 schematically shows a structure block diagram of an intelligent agent according to embodiments of the present disclosure; and
FIG. 10 schematically shows a block diagram of an example electronic device for implementing an interactive method based on a large model and a method of training a large model according to embodiments of the present disclosure.

### DETAILED DESCRIPTION OF EMBODIMENTS

Exemplary embodiments of the present disclosure will be described below with reference to accompanying drawings, which include various details of embodiments of the present disclosure to facilitate understanding and should be considered as merely exemplary. Therefore, those of ordinary skill in the art should realize that various changes and modifications may be made to embodiments described herein without departing from the scope and spirit of the present disclosure. Likewise, for clarity and conciseness, descriptions of well-known functions and structures are omitted in the following description.

In the technical solution of the present disclosure, the acquisition, storage, and application of user personal information involved comply with relevant laws and regulations, necessary confidentiality measures have been taken, and do not violate public order and good customs.

For the convenience of understanding embodiments of the present disclosure, the meanings of English abbreviations or technical terms involved in embodiments of the present disclosure may be explained based on the following content.

Artificial Intelligence Generated Content (AIGC) is a technology that uses the artificial intelligence technique, especially a pre-trained large model, to generate relevant content with appropriate generalization ability through learning and pattern recognition of existing data. The core idea of AIGC technology is to use the artificial intelligence algorithm to generate content with certain creativity and quality. It may generate related articles, images, audio, etc. based on an input condition or guidance.

Large models may include deep learning models with a large number of parameters and complex structures. Large models may process massive amounts of data and perform various types of complex tasks based on large-scale model parameters and complex model structures, such as natural language processing, computer vision, speech recognition, and other complex tasks. Large models may be constructed based on deep neural networks, with billions or even hundreds of billions of parameters. Large models learn complex patterns and features by training massive amounts of data, have strong generalization ability, and may make accurate predictions on unseen data. Large models may include a Large Language Model (LLM), which is a model based on machine learning and natural language processing techniques that learns thehuman language understanding and generation by training on large amounts of textual data. Large models may have billions or even hundreds of billions of parameters, allowing them to capture more language knowledge and complex grammatical structures. In terms of the network structure of large language models, for example, network structures such as Transformers may be used. The large language model has strong context aware ability in processing the text, which may understand and generate the text content that depends on the preceding text, and achieve accurate understanding of text content in dialogue, article generation, and contextual understanding. The large model in embodiments of the present disclosure may include the large language model, or may also include other types of generative large models other than the large language model.

In the process of human-computer interaction, users express their actual desires based on multimodal information such as speech and video. However, the AIGC model is difficult to accurately understand the user's actual desires, resulting in low matching between the generated response information and the user's actual desires, which in turn reduces the efficiency of human-computer interaction and affects the user's actual experience.

Embodiments of the present disclosure provide an interactive method and apparatus based on a large model, a training method and apparatus, an intelligent agent, an electronic device, a storage medium, and a program product. The interactive method based on the large model includes: acquiring a request speech; performing a speech recognition on the request speech to obtain a speech recognition feature representing a request semantics; and processing the speech recognition feature using the large model to obtain a response text, the response text including a plurality of response words arranged in sequence, a target response word among the plurality of response words is determined by processing the speech recognition feature and an associated response word feature using an attention fusion layer of the large model, and the associated response word feature is related to an associated response word arranged before the target response word.

According to embodiments of the present disclosure, by determining the speech recognition feature from the request speech and fusing the speech recognition feature and the associated response word feature based on the attention fusion layer of the large model, it is possible to achieve deep feature alignment of the generated associated response word and the speech recognition feature, thereby improving the deep semantic understanding ability of the large model for the request text represented by the request speech and response words, enabling the large model to response under the condition of deep understanding of the request intention, avoiding the hallucination of the large model, improving the matching degree between the response text and the request speech, and improving the accuracy of the response for the request speech and enhancing the user experience.

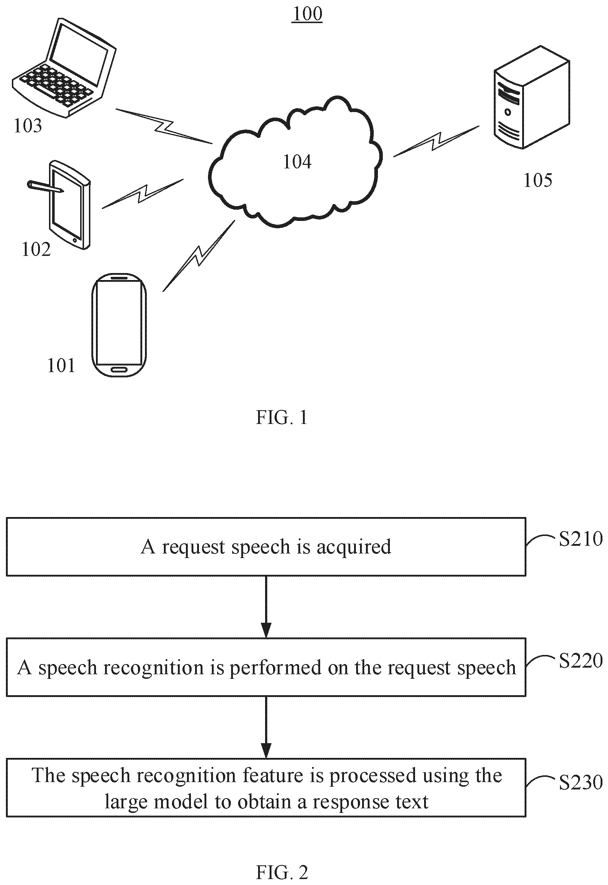

FIG. 1 schematically shows an exemplary system architecture that may apply an interactive method and apparatus based on a large model according to embodiments of the present disclosure.

It should be noted that the system architecture shown in FIG. 1 is only an example of the system architecture that may be applied to embodiments of the present disclosure, to help those skilled in the art understand the technical content of the present disclosure, but it does not mean that embodiments of the present disclosure cannot be used for other devices, systems, environments, or scenarios. For example, in another embodiment, an exemplary system architecture that may apply an interactive method and apparatus based on a large model may include a terminal device, but the terminal device may not need to interact with the server to implement the interactive method and apparatus based on the large model provided in embodiments of the present disclosure.

As shown in FIG. 1, a system architecture 100 according to embodiments may include terminal devices 101, 102, 103, a network 104, and a server 105. The network 104 is used to provide a medium for communication links between the terminal devices 101, 102, 103 and the server 105. The network 104 may include various connection types, such as wired and/or wireless communication links, etc.

The terminal devices 101, 102, and 103 may be used by the user to interact with the server 105 through the network 104 to receive or transmit messages etc. Various communication client applications may be installed on the terminal devices 101, 102, and 103, such as knowledge reading applications, web browser applications, search applications, instant messaging tools, email clients, and/or social platform software, etc. (only examples).

The terminal devices 101, 102, and 103 may be various electronic devices with a display screen and supporting web browsing, including but not limited to smart phones, tablet computers, laptop computers, and desktop computers, etc.

The server 105 may be a server that provides various services, such as a background management server (only an example) that provides support for websites browsed by the user using the terminal devices 101, 102, and 103. The background management server may analyze and process data such as a received user request, and a processing result (for example, webpage, information, or data acquired or generated according to the user request) is fed back to the terminal device.

The server may be a cloud server, also referred to as a cloud computing server or a cloud host, which is a host product in the cloud computing service system to solve shortcomings of difficult management and weak business scalability in conventional physical host and VPS (Virtual Private Server) service. The server may also be a server of a distributed system, or a server combined with a blockchain.

It should be noted that the interactive method based on the large model provided in embodiments of the present disclosure may generally be executed by the server 105. Correspondingly, the interactive apparatus based on the large model provided by embodiments of the present disclosure may also be generally disposed in the server 105. The interactive method based on the large model provided by embodiments of the present disclosure may also be executed by a server or a server cluster different from the server 105 and capable of communicating with the terminal devices 101, 102, 103 and/or the server 105. Correspondingly, the interactive apparatus based on the large model provided by embodiments of the present disclosure may also be disposed in the server or the server cluster different from the server 105 and capable of communicating with the terminal devices 101, 102, 103 and/or the server 105.

It should be understood that the numbers of terminal devices, networks and servers shown in FIG. 1 are merely illustrative. According to implementation needs, there may be any number of terminal devices, networks and servers.

FIG. 2 schematically shows a flowchart of an interactive method based on a large model according to embodiments of the present disclosure.

As shown in FIG. 2, the interactive method based on the large model includes operations S210 to S230.

In operation S210, a request speech is acquired.

In operation S220, a speech recognition is performed on the request speech to obtain a speech recognition feature representing a request semantics.

In operation S230, the speech recognition feature is processed using the large model to obtain a response text.

According to embodiments of the present disclosure, the request speech may be audio information that represents the user's request intention. For example, the request speech may be a question speech that represents a user's question, or may also be a control command speech used to control devices such as a household appliance and an assisted driving vehicle. However, the present disclosure is not limited to this. The request speech may also be audio information used to represent other types of requests such as users' emotional expression requests. The specific requests types represented by the request speech are not limited in embodiments of the present disclosure.

According to embodiments of the present disclosure, the request semantics may include the text semantics of the request speech. However, the present disclosure is not limited to this. The request semantics may also include audio attributes such as tone, intonation, and speed of the request speech. The speech recognition feature may be data information such as vectors, scalars, etc. that represent the request semantics such as the text semantics of the request speech and the audio attributes.

According to embodiments of the present disclosure, performing the speech recognition on the request speech may include processing the request speech based on a speech recognition algorithm such as the recurrent neural network algorithm and the hidden Markov model algorithm. The specific method of recognizing the request speech is not limited in embodiments of the present disclosure, as long as it may obtain the speech recognition feature that represents the request semantics.

In an example, the speech recognition may be performed by processing the request speech using a speech recognition large model. The speech recognition feature may represent the audio attributes and text semantics of the request words corresponding to the request speech, so as to improve the accuracy of the speech recognition feature in representing the request intention of the request speech.

In an example, the speech recognition large model may be used to process the request speech, so as to accurately capture the request words corresponding to the request text audio information from the request speech having the environmental audio information, and to avoid the interference of environmental audio information on the text semantics in the request text. In addition, the speech recognition large model may also be used to fuse the speech recognition feature with semantics related to the environmental attributes by recognizing the environmental attributes represented by the environment audio information, so as to enhance the richness of semantics represented by the speech recognition feature. By using the large model to process the semantically rich speech recognition feature, the text generation task may be more accurately controlled, thereby improving the expression accuracy of the response text and the matching degree between the response text and the request speech.

According to embodiments of the present disclosure, the response text includes a plurality of response words arranged in sequence, a target response word among the plurality of response words is determined by processing the speech recognition feature and an associated response word feature using an attention fusion layer of the large model, and the associated response word feature is related to an associated response word arranged before the target response word.

According to embodiments of the present disclosure, the response word may represent any type of character such as Chinese characters, English words, English letters, logical symbols, punctuation marks, etc. The specific character types of the response word are not limited in embodiments of the present disclosure.

According to embodiments of the present disclosure, the associated response word feature may be a hidden feature that represents the textual semantics of the associated response word. The large model may include a plurality of attention fusion layers. By using the attention fusion layers of the large model to perform attention fusion on the associated response word feature and the speech recognition feature, it is possible to achieve deep feature fusion of the request speech in the speech modality and the associated response word in the text modality, avoiding the fusion of feature information of different modalities through feature embedding. This improves the deep understanding ability of the large model for multimodal feature information, thereby enhancing the matching degree between the generated response text and the request intention expressed by the request speech, and improving the accuracy of the response text.

It may be understood that the target response word in the response text may be any specified response word. The target response word may be generated by processing the speech recognition feature and the associated response word feature corresponding to the generated associated response word using the attention fusion layer. In this way, the generated target response word may be used as the generated associated response word, and the attention fusion layer may be used to cyclically process the generated associated response word feature and the speech recognition feature to obtain a new target response word until all response words in the response text are generated.

According to embodiments of the present disclosure, the processing the speech recognition feature using the large model to obtain a response text may include: processing, using a text feature fusion layer, an initial associated response word feature representing the associated response word, so as to obtain the associated response word feature; processing the speech recognition feature and the associated response word feature using the attention fusion layer to obtain a target response word feature; and determining the target response word based on the target response word feature.

According to embodiments of the present disclosure, the large model further includes a text feature fusion layer. The large model may include one or more feature fusion networks. The initial associated response word feature may be the feature information that represents the associated response word. For example, the initial associated response word feature A1 may be related to the associated response word "A". Linear regression may be performed on the initial associated response word feature A1 to obtain the associated response word "A".

It should be noted that the initial associated response word feature may be generated by the feature fusion network of the large model when the associated response word is used as the target response word. For example, the target response word "B" may be generated based on the target response word feature "B1". Using the target response word "B" as the associated response word and using the target response word feature "B1" as the initial associated response word feature, the initial associated response word feature "B1" may be processed based on the large model, so as to obtain a new target response word feature and a corresponding target response word.

In an example, the feature fusion network may include cascaded text feature fusion layer, attention fusion layer, and feed-forward layer. The text feature fusion layer may be constructed based on the self-attention algorithm, which is used to perform attention fusion on one or more initial associated response word features based on the self-attention mechanism, so that the associated response word feature may fuse the response context semantics related to the target response word.

According to embodiments of the present disclosure, by using the attention fusion layer to process the speech recognition feature and the associated response word feature, it is possible to achieve deep feature alignment of the associated response word feature and the speech recognition feature representing the semantics of the request intention in one or more feature fusion networks of the large model, so as to enhance the depth of feature fusion and enable the large model to accurately generate the target response word under the condition of deep understanding of the semantics of the request intention and the semantics of the generated associated response word, thereby avoiding semantic information loss and understanding errors, reducing the probability of hallucinations in the large model, and improving the matching degree between the target response text and the request intention representing by the request speech.

According to embodiments of the present disclosure, the large model may include a plurality of feature fusion networks. The feature fusion network may include cascaded text feature fusion layer, attention fusion layer, and feed-forward layer. The text feature fusion layer may be used to process a plurality of associated response word features arranged before the target response word, so as to achieve semantic fusion of the contextual semantics represented by the associated response word features. Based on the attention fusion layer, multi-level deep fusion may be performed on the speech recognition feature and the initial associated response word feature, which may achieve deep feature alignment of the semantics of the request intention and the associated response word. This enables deep communication and deep fusion of information of different modalities in semantic attributes such as text semantics, emotional attributes, and contextual information, enabling the large model to understand the content of the request speech during complex interactive tasks, therefore improving the accuracy of the response text.

According to embodiments of the present disclosure, by using the attention fusion layer of each of the plurality of feature fusion networks to perform the feature fusion on the speech recognition feature and the associated response word feature, the large model may not only perform the surface feature aligning on information of different modalities, but also capture the complex contextual relationship between the request speech and the response text through multi-level interaction of multi-level attention fusion layers. In this way, when processing multi-step reasoning tasks or multiple rounds of dialogue, the large model may effectively model the long-term dependency relationships between different modalities, further improving the accuracy of the response text.

According to embodiments of the present disclosure, the number of text feature fusion layers is N, the number of attention fusion layers is N, and N is an integer greater than 1. It should be understood that, the large model may include N cascaded feature fusion networks.

According to embodiments of the present disclosure, the processing the speech recognition feature and the associated response word feature using the attention fusion layer to obtain a target response word feature may include: processing the speech recognition feature and an n^{th} associated response word feature using an n^{th} attention fusion layer, so as to obtain an n^{th} intermediate fusion feature; and determining the target response word feature based on an N^{th} intermediate fusion feature in a case of n=N.

According to embodiments of the present disclosure, N≥n>1, and N may be an integer. The n^{th} associated response word feature is determined by processing an (n-1)^{th} intermediate fusion feature using an n^{th} text feature fusion layer, and a first associated response word feature is determined by processing the initial associated response word feature using a first text feature fusion layer.

In an example, the attention fusion layer is constructed based on the Cross-Attention algorithm. The attention fusion layer is used to perform a deeply cross fusion on a plurality of associated response word features and the speech recognition feature based on the Cross-Attention mechanism, thereby enhancing the understanding ability of the large model for information of different modalities.

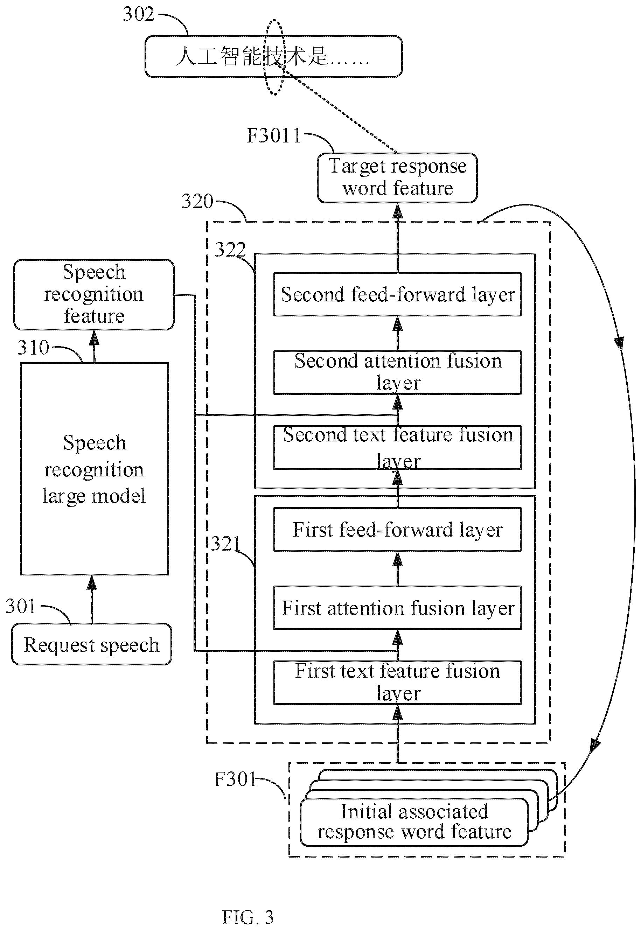

FIG. 3 schematically shows an application scenario diagram of an interactive method based on a large model according to embodiments of the present disclosure.

As shown in FIG. 3, this application scenario may include a speech recognition large model 310 and a large model 320. The large model 320 may include cascaded first feature fusion network 321 and second feature fusion network 322. The first feature fusion network 321 includes cascaded first text feature fusion layer, first attention fusion layer, and first feed-forward layer. The second feature fusion network 322 includes cascaded second text feature fusion layer, second attention fusion layer, and second feed-forward layer. It may be understood that N=2.

A request speech 301 may be a speech audio information that represents a request text " 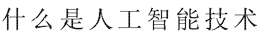 (Chinese characters: What is artificial intelligence technology)". The request speech 301 is input into the speech recognition large model 310 to perform speech recognition on the request speech 301, so as to output the speech recognition feature. An initial associated response word feature F301 may be related to four response words " 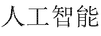 (artificial intelligence)" in the generated response text.

The initial associated response word feature F301 is input into the first text feature fusion layer to output the first associated response word feature. The first associated response word feature and the speech recognition feature are input into the first attention fusion layer to output the first intermediate fusion feature. In the case of n=2, the first feed-forward layer and the second text feature fusion layer are cascaded to process the first intermediate fusion feature to obtain the second associated response word feature. The second associated response word feature and the speech recognition feature are input into the second attention fusion layer to output the second intermediate fusion feature. The second intermediate fusion feature is input into the second feed-forward layer to output the target response word feature F3011. The target response word feature F3011 may represent the target response word " 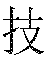 ".

It should be understood that for the target response word " 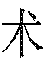 ", the five response words " 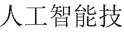 " in the response text 302 may be used as the associated response words. The associated response word feature related to " 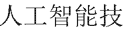 " may be processed using the interactive method based on the large model provided in embodiments of the present disclosure, so as to obtain a new target response word. The response text 302 is obtained until generating all sequentially arranged response words.

According to embodiments of the present disclosure, the performing a speech recognition on the request speech to obtain a speech recognition feature representing a request semantics may include: performing a feature extraction on the request speech to obtain an initial speech feature; decoding the initial speech feature to obtain a plurality of initial decoding features; and fusing the plurality of initial decoding features and the initial speech feature based on an attention mechanism to obtain the speech recognition feature.

According to embodiments of the present disclosure, the initial decoding feature represents the recognition result of the request word in the request speech. For example, the initial decoding feature may be a first speech recognition result corresponding to the request word, and a plurality of initial decoding features correspond one-to-one with a plurality of request words represented by the request speech.

According to embodiments of the present disclosure, the initial decoding feature and the initial speech feature may be processed based on any type of attention network algorithm such as Transformer, so as to obtain the speech recognition feature.

According to embodiments of the present disclosure, the attention mechanism fuses a plurality of initial decoding features and the initial speech feature, so that the speech recognition feature includes the text semantics of the request word corresponding to the speech segment of the request speech, as well as various types of speech attributes such as speed, intonation, and emotional attributes represented by the request speech. This enables the speech recognition feature to accurately represent the text semantics of the request text, and also include rich speech attributes, thereby improving the accuracy of the speech recognition feature in representing the request intention.

According to embodiments of the present disclosure, the fusing the plurality of initial decoding features and the initial speech feature based on an attention mechanism to obtain the speech recognition feature may include: fusing the initial decoding features and the initial speech feature based on the attention mechanism to obtain request word audio features corresponding to the request words; performing a global feature fusion on a plurality of request word audio features to obtain an intermediate speech feature; and fusing the intermediate speech feature and the plurality of initial decoding features based on the attention mechanism to obtain the speech recognition feature.

According to embodiments of the present disclosure, the initial decoding features and the initial speech feature are fused based on the attention mechanism. The initial decoding feature corresponding to each request word may be used as prior information to fully fuse the initial decoding feature of each request word with the audio segment corresponding to the initial speech feature, so that the request word audio feature may accurately represent the text semantics and speech attributes of the audio segment corresponding to the request word.

According to embodiments of the present disclosure, performing the global feature fusion on the plurality of request word audio features may include fusing the plurality of request word audio features based on the attention network algorithm, and the obtained intermediate speech feature may include intermediate speech word features corresponding to the plurality of request words. Speech feature information of unequal length are extracted from the frame-level audio information of the request speech, and the word-level audio features of uniformly equal length are extracted from the speech feature information and represented as the initial speech feature of the request speech. Using the plurality of initial decoding features as priors to fuse the initial speech feature and the plurality of initial decoding features may address the issue of inconsistent feature representation lengths in speech framing, thereby improving the accuracy of speech recognition.

According to embodiments of the present disclosure, fusing the intermediate speech feature and the plurality of initial decoding features based on the attention mechanism to obtain the speech recognition feature may include: using the initial decoding feature as a query feature and using the intermediate speech feature as a key feature and a value feature of the attention algorithm. The query feature, the key feature, and the value feature are fused based on the attention algorithm, so as to obtain the speech recognition feature. The speech recognition feature may represent the text semantics and speech attributes represented by the speech audio segment corresponding to the request word. By inputting the speech recognition feature into the plurality of attention fusion layers of the large model, multimodal feature fusion may be achieved, which allows the request speech in the audio modality after modal transformation to be directly calculated with the associated response word feature, avoiding feature embedding and other modal transformation calculations for the request speech in each network structure of the large model, and achieving deep calculation between information of different modalities. In this way, the speech recognition large model and the multi-level attention fusion layer may be used to more efficiently align the information represented by speech and text modalities, improving the response speed of the large model for responsing the request speech.

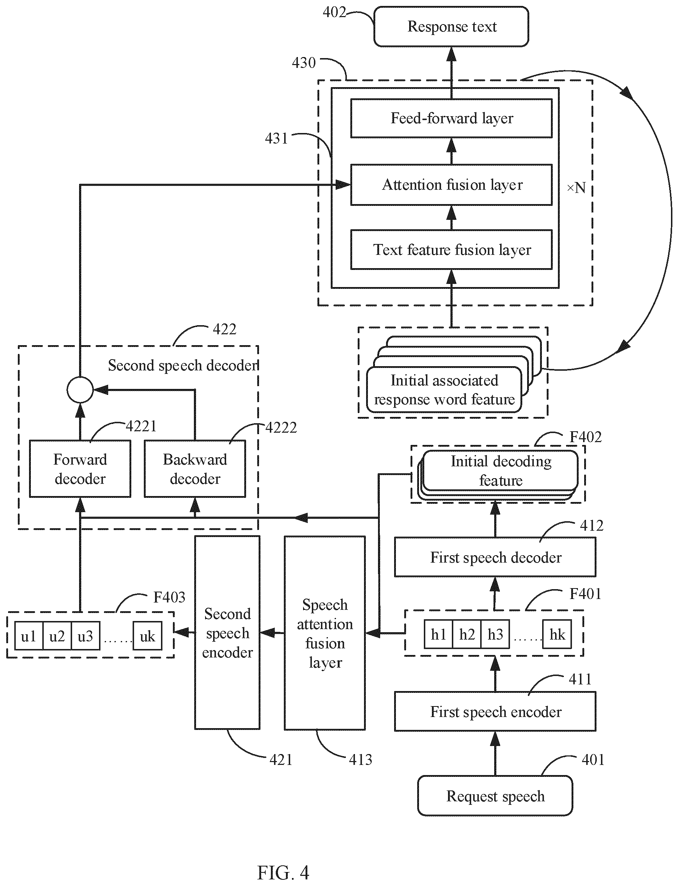

FIG. 4 schematically shows an application scenario diagram of an interactive method based on a large model according to another embodiment of the present disclosure.

As shown in FIG. 4, this application scenario may include a speech recognition large model and a large model 430. The speech recognition large model may include a first speech encoder 411, a first speech decoder 412, a speech attention fusion layer 413, a second speech encoder 421, and a second speech decoder 422. The large model 430 includes N feature fusion networks 431. The feature fusion network 431 may include cascaded text feature fusion layer, attention fusion layer, and feed-forward layer.

The request speech 401 is input into the first speech encoder 411 to achieve feature extraction of the request speech 401 and obtain the initial speech feature F401. The initial speech feature F401 may include a plurality of initial speech sub-features arranged in sequence, which are h1, h2, h3......hk. The plurality of initial speech sub-features correspond to the request words in the request speech 401, respectively. The initial speech feature F401 is input into the first speech decoder 412 to obtain the initial decoding feature F402 that represents the recognition result of the request word. The initial speech feature F401 and the initial decoding feature F402 are input into the speech attention fusion layer 413 for attention fusion, so as to obtain the request word audio feature corresponding to the request word. The request word audio features corresponding to the plurality of request words are input into the second speech encoder 421 for global feature fusion, so as to obtain the intermediate speech feature F403. The plurality of intermediate speech sub-features in the intermediate speech feature F403 are u1, u2, u3 ......uk.

Fusing the intermediate speech feature and the plurality of initial decoding features based on the attention mechanism may include inputting the initial decoding feature F402 and the intermediate speech feature F403 into the second speech decoder 422 to output the speech recognition feature. The second speech decoder 422 may include, for example, a forward decoder 4221 and a backward decoder 4222. For example, the forward decoder 4221 may decode the initial decoding feature F402 and the intermediate speech feature F403 based on a forward arrangement direction of the request words in the request text, so as to obtain the forward speech recognition feature. For example, the backward decoder 4222 may decode the initial decoding feature F402 and the intermediate speech feature F403 based on a backward arrangement direction of the request words in the request text, so as to obtain the backward speech recognition feature. The speech recognition feature may be obtained by fusing the forward speech recognition feature and the backward speech recognition feature based on an attention weight.

As shown in FIG. 4, the speech recognition feature may be input into the attention fusion layers of the plurality of feature fusion networks in the large model 430, so that the text feature fusion layer and the attention fusion layer may perform multi-level deep fusion based on the initial associated response word feature and the speech recognition feature, so as to obtain the response text 402.

According to embodiments of the present disclosure, in the multimodal interaction process, the speech recognition large model is used to process the request speech to obtain the speech recognition feature, and the attention network layer of the large model is used to deeply fuse the associated response word feature and the speech recognition feature of different modalities, avoiding the large computational overhead caused by the large model repeatedly performing the multimodal feature aligning on the speech text embedding feature and the associated response word feature in the text feature fusion layer constructed based on the self-attention mechanism, thereby reducing the device computing cost of interaction behavior and improving the computing efficiency of devices in the multimodal information interaction process.

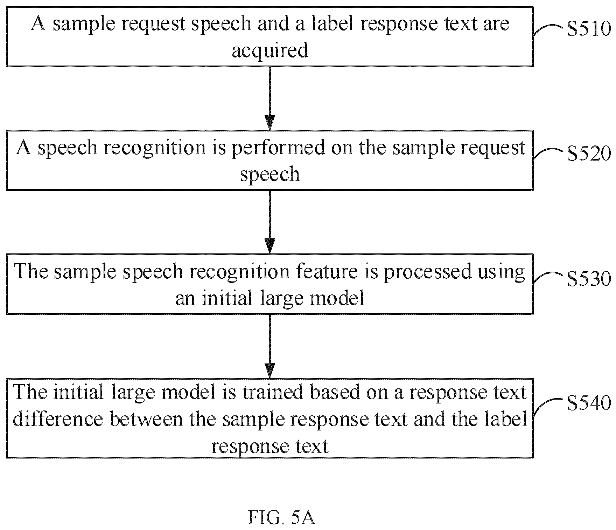

FIG. 5A schematically shows a flowchart of a method of training a large model according to embodiments of the present disclosure.

As shown in FIG. 5A, the method of training the large model includes operations S510 to S540.

In operation S510, a sample request speech and a label response text are acquired.

In operation S520, a speech recognition is performed on the sample request speech to obtain a sample speech recognition feature.

In operation S530, the sample speech recognition feature is processed using an initial large model to obtain a sample response text.

In operation S540, the initial large model is trained based on a response text difference between the sample response text and the label response text to obtain a trained large model.

According to embodiments of the present disclosure, the sample request speech may be audio information representing the sample request text. The sample request speech may have any type of speech attributes, such as specified speech rate attributes, emotional attributes, gender attributes, etc. The specific speech attributes of the sample request speech are not limited in embodiments of the present disclosure. The label response text may be text information used to response to the sample request speech.

According to embodiments of the present disclosure, performing the speech recognition on the sample request speech may include processing the sample request speech based on any type of speech recognition algorithm. The specific algorithm type for performing the speech recognition is not limited in embodiments of the present disclosure.

According to embodiments of the present disclosure, the sample response text includes a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word.

The trained large model in the training method provided in embodiments of the present disclosure may be applied to the interactive method based on the large model provided in embodiments of the present disclosure. For example, the trained large model may be used to process the speech recognition feature corresponding to the request speech to obtain the response text. The technical terms involved in the interactive method based on the large model provided in embodiments of the present disclosure, including but not limited to the request speech, the speech recognition feature, etc., have the same or corresponding meanings as the technical terms involved in the method of training the large model provided in embodiments of the present disclosure, including but not limited to the sample request speech, the sample speech recognition feature, etc., which will not be repeated here.

According to embodiments of the present disclosure, the response text difference may represent the difference information between the sample response text and the label response text. Training the initial large model based on the response text difference between the sample response text and the label response text may include: determining the response text loss value based on the response text difference between the sample response text and the label response text, and adjusting the model parameter of the initial large model using the response text loss value until the response text loss value converges, so as to obtain the trained large model.

According to embodiments of the present disclosure, the sample speech recognition feature is determined by processing the sample request speech using the speech recognition large model. The speech recognition large model may be a speech modality large model constructed based on the attention network algorithm.

According to embodiments of the present disclosure, the training the initial large model based on a response text difference between the sample response text and the label response text to obtain a trained large model may include: determining a response text loss value based on the response text difference between the sample response text and the label response text; and adjusting a model parameter of the speech recognition large model and a model parameter of the initial large model based on the response text loss value and a request feature loss value to obtain the trained large model.

According to embodiments of the present disclosure, the request feature loss value represents the difference between the sample speech recognition feature and the preset label request text feature. The label request text feature may be obtained by processing the sample request text using the preset large model. By using the preset large model as a text encoder to process the sample request text, the obtained label request text feature may be fused with the textual feature between the sample request words of the sample request text, and the semantics of the request intention of the sample request text may be extracted. By using the difference between the label request text feature and the sample speech recognition feature to determine the request feature loss value, the request feature loss value may accurately represent the request intention understanding ability of the speech recognition large model for the sample request speech in the speech modality. The model parameter of the speech recognition large model and the model parameter of the initial large model may be adjusted based on the response text loss value and the request feature loss value, so that the expression ability of the speech recognition large model for the sample request speeches of different speech attributes may be accurately adjusted in the training process, and the understanding ability of the large model for the text semantic attributes and sample speech attributes expressed by the sample request speech may be improved, thereby enhancing the understanding ability for the request intention of the request speech, and outputting more accurate response text.

In an example, adjusting the model parameter of the speech recognition large model and the model parameter of the initial large model based on the response text loss value and the request feature loss value may include: determining a joint loss value based on the response text loss value and the request feature loss value, and adjusting the model parameter of the speech recognition large model and the model parameter of the initial large model based on the joint loss value.

In an example, adjusting the model parameter of the speech recognition large model and the model parameter of the initial large model based on the response text loss value and the request feature loss value may include the following: in the first stage, the model parameter of the speech recognition large model is adjusted based on the request feature loss value until the request feature loss value converges, so as to obtain the trained speech recognition large model, and in the second stage, the model parameter of the initial large model is adjusted based on the response text loss value until the response text loss value converges, so as obtain the trained large model.

According to embodiments of the present disclosure, the sample request speech includes sample request text audio information representing the sample request text, and sample environment audio information representing the speech environment sound.

According to embodiments of the present disclosure, the sample request text audio information may refer to the sound audio corresponding to the sample request words in the sample request text, such as sound audio segments corresponding to the plurality of sample request words. The sample environment audio information may refer to the background audio that generates the sample request text audio information.

In an example, the speech recognition large model may be used to process the sample request speech to accurately capture the sample request text audio information from the sample request speech having the sample environment audio information, so as to avoid interference of sample environment audio information on the text semantics in the sample request text. In addition, the speech recognition large model may also be used to fuse the speech recognition feature with the semantic related to environmental attributes by recognizing the environmental attributes represented by the sample environment audio information, so as to enhance the richness of semantics represented by the speech recognition feature.

According to embodiments of the present disclosure, a plurality of sample request speeches are provided, and the plurality of sample request speeches have different sample speech attributes.

According to embodiments of the present disclosure, the sample speech attribute includes at least one of: a timbre attribute, a speed attribute, a gender attribute, or an accent attribute.

According to embodiments of the present disclosure, the timbre attribute may represent speech audios with different timbres. The speed attribute may represent the number of sample request words represented by the sample request speech in a preset duration. The gender attribute may be the gender of the target object expressing the sample request speech. The accent attribute may refer to the pronunciation style of the sample request speech related to the accent.

According to embodiments of the present disclosure, by using the speech recognition large model to process the sample request speeches with different sample speech attributes, the sample speech recognition feature may include diverse sample speech attribute semantics, so that the trained large model may learn sample speech recognition features with different sample speech attribute semantics, and combine the diverse sample speech attribute semantics and the sample request text semantics to perform text response tasks, so that the large model may accurately capture the request intention represented by the sample request speech, thereby improving the matching degree between the sample response text and the sample request intention and enhancing the accuracy of the sample response text.

According to embodiments of the present disclosure, the label request text feature is determined by processing the sample request text using a preset large model. The preset large model may be a universal base large model, or it may be a specialized large model determined after fine-tuning for specific application scenarios. The specific types of preset large models are not limited in embodiments of the present disclosure.

According to embodiments of the present disclosure, the sample request speech is determined based on the sample request text. The sample request speech may be obtained by processing the sample request text using speech synthesis algorithms such as Hidden Markov Model (HMM). The sample request speech may have one or more sample speech attributes.

According to embodiments of the present disclosure, the text feature fusion layer of the large model is used to fuse the text semantics between initial response word features, and the attention fusion layer is used to deeply align the associated response word feature and the speech recognition feature of different modalities, so that the performance of the large model for the multimodal information may be improved and the computational pressure may be reduced. In addition, by deeply aligning the feature information of different modalities, the large model may capture more accurate semantic, emotional, and contextual relationships between multimodal feature information, thereby fully utilizing the advantages of large-scale data training.

According to embodiments of the present disclosure, the initial large model is determined by training an extended large model, and the extended large model is obtained by updating a network structure of a pre-trained basic large model based on an extended attention fusion layer.

According to embodiments of the present disclosure, the basic large model may include a general base large model, or may also include a specialized large model that matches a specified scenarios or task type. The specific types of basic large models are not limited in embodiments of the present disclosure, as long as they are large models that have been pre-trained. By updating the basic large model based on the extended attention fusion layer to obtain the extended large model, it is possible to achieve the reuse of the basic model parameters and model structure of the basic large model, reducing the difficulty and operational complexity of constructing the initial large model subsequently. By training the extended large model to obtain the initial large model, the initial large model may have a model structure that deeply aligns feature information of different modalities, and the time length required to adjust the model parameter of the initial large model in the training process is reduced, thereby improving the training efficiency.

It should be noted that the large model or initial large model in embodiments of the present disclosure may be a large model used for processing textual modal information, for example, the large model and the initial large model may be a large language model and an initial large language model. The speech recognition large model in embodiments of the present disclosure may be a large model used for processing the audio modal information, which will not be repeated in embodiments of the present disclosure.

According to embodiments of the present disclosure, the basic large model includes a multi-level basic feature fusion network, and the basic feature fusion network includes cascaded basic text feature fusion layer and basic feed-forward layer.

According to embodiments of the present disclosure, the extended large model includes a multi-level extended feature fusion network, and the extended feature fusion network includes cascaded basic text feature fusion layer, extended attention fusion layer, and basic feed-forward layer. The extended large model may be constructed by adding an extended attention fusion layer between the basic text feature fusion layer and the basic feed-forward layer of the basic large model.

According to embodiments of the present disclosure, the initial large model may be determined based on following training operations: acquiring the extended large model, the pre-trained basic large model, a sample extension request text and a label extension response text; processing the sample extension request text using the basic large model to obtain a sample extension request text feature; processing the sample extension request text feature using the extended large model to obtain a sample extension response text; and training the extended large model based on a difference between the sample extension response text and the label extension response text, so as to obtain the initial large model.

According to embodiments of the present disclosure, the sample extension request text and the label extension response text may include question and answer pairs extracted from real user interaction scenarios, which enables the label extension response text to more accurately response to the request intention of the sample extension request text.

According to embodiments of the present disclosure, the difference between the sample extended response text and the label extended response text may be represented based on the loss value obtained by processing the sample extended response text and the label extended response text using a loss function. One or more model parameters of the extended large model is adjusted based on the loss value between the sample extended response text and the label extended response text until the loss value converges, so as to obtain the trained initial large model.

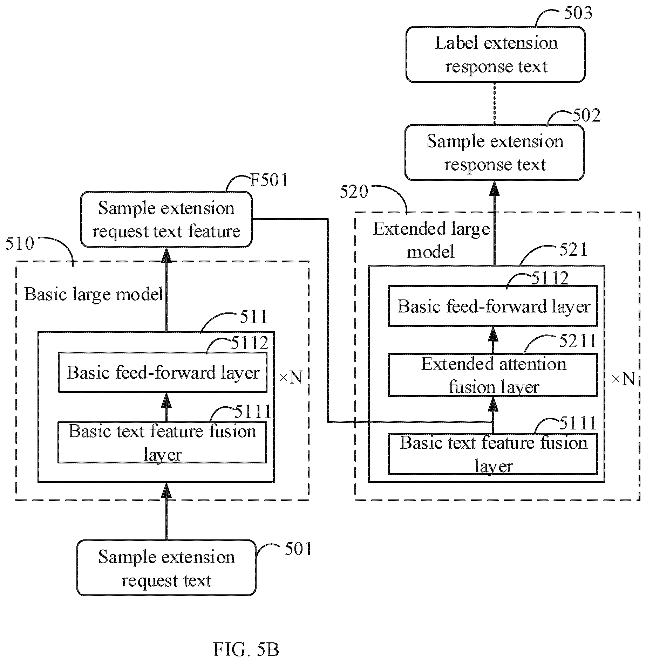

FIG. 5B schematically shows a principle diagram of determining an initial large model according to embodiments of the present disclosure.

As shown in FIG. 5B, the basic large model 510 may include N basic feature fusion networks 511. The basic feature fusion network 511 includes cascaded basic text feature fusion layer 5111 and basic feed-forward layer 5112. The extended large model 520 may include N extended feature fusion networks 521. The extended feature fusion network 521 includes cascaded basic text feature fusion layer 5111, extended attention fusion layer 5211, and basic feed-forward layer 5112. The initial large model is trained based on the following operations.

The sample extension request text 501 is input into the basic large model 510, so as to output the sample extension request text feature F501. The N basic feature fusion network 511 of the basic large model 510 may be used as a text encoder to perform feature extraction and text semantics fusion on the sample extension request text 501, so that the sample extension request text feature F501 may accurately represent the text semantics of each word of the sample extension request text 501 and the overall text semantics of the sample extension request text 501.

The sample extension request text feature F501 is input into the extended attention fusion layers 5211 of the N extended feature fusion networks 521 of the extended large model 520, so that the N extended feature fusion networks 521 may learn the understanding ability for the text semantics expressed in the sample extension request text 501 and the sample extension response text 502. The model parameter of the extended large model 520 is adjusted based on the loss value between the label extension response text and the sample extension response text until the loss value converges, so as to obtain the trained initial large model, thereby achieving pre-training of the initial large model using the text modal information.

According to embodiments of the present disclosure, after the initial pre-training of the expanded large model with the sample extended request text and the label extended response text in pure text modal, the pre-training may be performed on the basis of the initial text understanding ability of the basic large model, so that the dialogue interaction ability of the trained initial large model may be consistent with the ability of the general basic large model, thereby improving the generalization ability of the initial attention fusion layer in understanding different types of text, reducing the training cycle of the initial large model, improving the training efficiency, and enhancing the text generation task execution ability of the trained initial large model to response to the request intention of the sample extended request text.

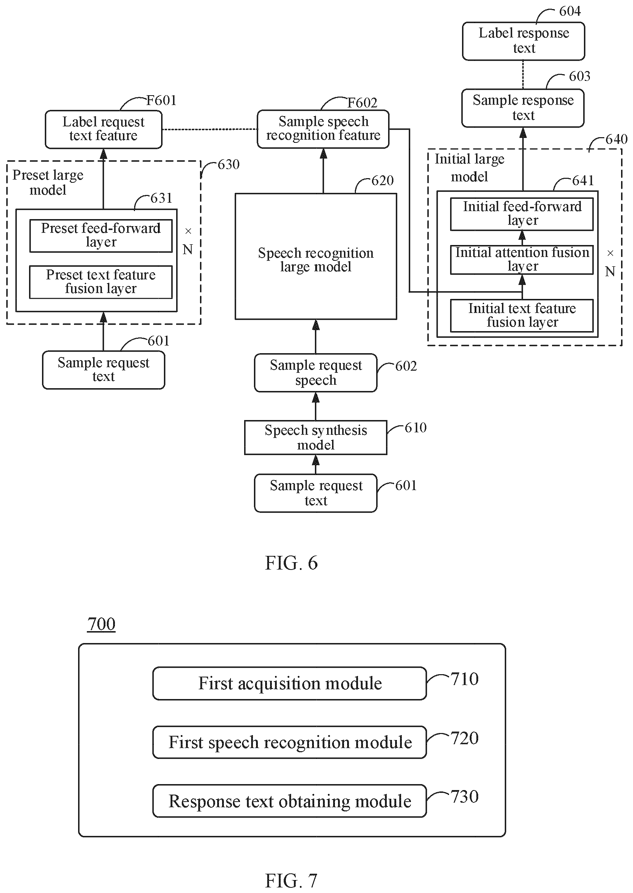

FIG. 6 schematically shows a principle diagram of a method of training a large model according to embodiments of the present disclosure.

As shown in FIG. 6, the sample request text 601 is input into the speech synthesis model 610, so as to output the sample request speech 602 with sample speech attributes. The sample request speech 602 is input into the speech recognition large model 620, so as to output the sample speech recognition feature F602. The speech synthesis model 610 may be constructed based on the speech synthesis algorithm.

The sample request text 601 is input into the preset large model 630, so as to output the label request text feature F601. The preset large model 630 may include cascaded N preset feature fusion networks 631, and the preset feature fusion network 631 may include cascaded preset text feature fusion layer and preset feed-forward layer. Using the preset large model 630 as a text encoder may enable the label request text feature F601 to accurately represent the text semantics of the sample request text 601.

The initial large model 640 includes cascaded N initial feature fusion networks 641. The initial feature fusion network 641 may include cascaded initial text feature fusion layer, initial attention fusion layer, and initial feed-forward layer. By inputting the sample speech recognition feature F602 into the initial attention fusion layers of N initial feature fusion networks 641, the initial large model may deeply align the sample speech recognition feature and the sample associated response word feature in the sample response text 603 of different modalities, until all sample target response words are generated, so as to obtain the sample response text 603.

The sample response text 603 and the label response text 604 are processed based on the loss function to obtain the response text loss value. The sample speech recognition feature F602 and the label request text feature F601 are processed based on the loss function to obtain the request feature loss value. The joint loss value is determined based on the response text loss value and the request feature loss value. The model parameter of the speech recognition large model and the model parameter of the initial large model are adjusted based on the joint loss value. The trained large model may be obtained until the joint loss value converges.

According to embodiments of the present disclosure, training the initial large model based on the response text loss value and the request feature loss value may achieve that the feature alignment ability of the large model in deep fusion of different modal information is ensured based on multi-modal loss values generated based on different modal information, and achieve the understanding ability for different modal information, so that the large model may reach a convergence state stably.

According to embodiments of the present disclosure, generating the sample request speech through speech synthesis of sample request text may enable the sample request speech to represent the request intentions expressed by users in different scenarios, thereby improving the authenticity of the sample request speech and enhancing the accuracy of the sample speech recognition feature in representing the request intention. By using the initial attention fusion layer to deeply fuse the sample speech recognition feature with the sample associated response word feature, the trained large model may adapt to diverse speech environments or user expressions such as noise and noisy environments, improving the robustness and generalization ability of the large model in the interaction process. By generating the sample request speech based on speech synthesis and combining it with real sample request speech to construct training data, the convergence speed of model parameters of the large model may be accelerated, redundant computing tasks may be reduced, and overall training costs may be lowered.

FIG. 7 schematically shows a block diagram of an interactive apparatus based on a large model according to embodiments of the present disclosure.

As shown in FIG. 7, an interactive apparatus 700 based on a large model includes a first acquisition module 710, a first speech recognition module 720, and a response text obtaining module 730.

The first acquisition module 710 is used to acquire a request speech.

The first speech recognition module 720 is used to perform a speech recognition on the request speech to obtain a speech recognition feature representing a request semantics.

The response text obtaining module 730 is used to process the speech recognition feature using the large model to obtain a response text, where the response text includes a plurality of response words arranged in sequence, a target response word among the plurality of response words is determined by processing the speech recognition feature and an associated response word feature using an attention fusion layer of the large model, and the associated response word feature is related to an associated response word arranged before the target response word.

According to embodiments of the present disclosure, the response text obtaining module 730 includes an associated response word feature obtaining sub-module, a target response word feature obtaining sub-module, and a target response word obtaining sub-module.

The associated response word feature obtaining sub-module is used to process, using a text feature fusion layer, an initial associated response word feature representing the associated response word, so as to obtain the associated response word feature, where the large model further includes the text feature fusion layer.

The target response word feature obtaining sub-module is used to process the speech recognition feature and the associated response word feature using the attention fusion layer to obtain a target response word feature.

The target response word obtaining sub-module is used to determine the target response word based on the target response word feature.

According to embodiments of the present disclosure, the large model includes N text feature fusion layers and N attention fusion layers, and N is an integer greater than 1.

According to embodiments of the present disclosure, the target response word feature obtaining sub-module includes a first obtaining unit and a target response word feature determination unit.

The first obtaining unit is used to process the speech recognition feature and an n^{th} associated response word feature using an n^{th} attention fusion layer, so as to obtain an n^{th} intermediate fusion feature, where N≥n>1, the n^{th} associated response word feature is determined by processing an (n-1)^{th} intermediate fusion feature using an n^{th} text feature fusion layer, and a first associated response word feature is determined by processing the initial associated response word feature using a first text feature fusion layer.

The target response word feature determination unit is used to determine the target response word feature based on an N^{th} intermediate fusion feature in a case of n=N.

According to embodiments of the present disclosure, the first speech recognition module 720 includes an initial speech feature obtaining sub-module, a first decoding sub-module, and a speech recognition feature obtaining sub-module.

The initial speech feature obtaining sub-module is used to perform a feature extraction on the request speech to obtain an initial speech feature.

The first decoding sub-module is used to decode the initial speech feature to obtain a plurality of initial decoding features, where the initial decoding feature represents a request word in the request speech.

The speech recognition feature obtaining sub-module is used to fuse the plurality of initial decoding features and the initial speech feature based on an attention mechanism to obtain the speech recognition feature.

According to embodiments of the present disclosure, the speech recognition feature obtaining sub-module includes a request word audio feature obtaining unit, an intermediate speech feature obtaining unit, and a speech recognition feature obtaining unit.

The request word audio feature obtaining unit is used to fuse the initial decoding feature and the initial speech feature based on the attention mechanism to obtain a request word audio feature corresponding to the request word;

The intermediate speech feature obtaining unit is used to perform a global feature fusion on a plurality of request word audio features to obtain an intermediate speech feature.

The speech recognition feature obtaining unit is used to fuse the intermediate speech feature and the plurality of initial decoding features based on the attention mechanism to obtain the speech recognition feature.

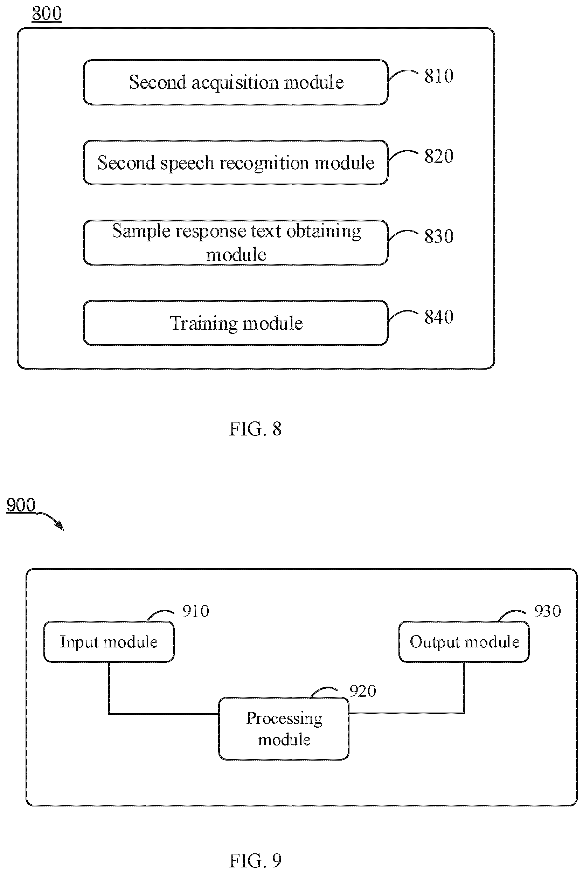

FIG. 8 schematically shows a block diagram of an apparatus of training a large model according to embodiments of the present disclosure.

As shown in FIG. 8, an apparatus 800 of training a large model includes a second acquisition module 810, a second speech recognition module 820, a sample response text obtaining module 830, and a training module 840.

The second acquisition module 810 is used to acquire a sample request speech and a label response text.

The second speech recognition module 820 is used to perform a speech recognition on the sample request speech to obtain a sample speech recognition feature.

The sample response text obtaining module 830 is used to process the sample speech recognition feature using an initial large model to obtain a sample response text, where the sample response text includes a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word.

The training module 840 is used to train the initial large model based on a response text difference between the sample response text and the label response text to obtain a trained large model.

According to embodiments of the present disclosure, the initial large model is determined by training an extended large model, and the extended large model is obtained by updating a network structure of a pre-trained basic large model based on an extended attention fusion layer.

According to embodiments of the present disclosure, the basic large model includes a multi-level basic feature fusion network, and the basic feature fusion network includes cascaded basic text feature fusion layer and basic feed-forward layer; and the extended large model includes a multi-level extended feature fusion network, and the extended feature fusion network includes cascaded basic text feature fusion layer, extended attention fusion layer, and basic feed-forward layer.

According to embodiments of the present disclosure, the initial large model is determined based on following training operations: acquiring the extended large model, the pre-trained basic large model, a sample extension request text and a label extension response text; processing the sample extension request text using the basic large model to obtain a sample extension request text feature; processing the sample extension request text feature using the extended large model to obtain a sample extension response text; and training the extended large model based on a difference between the sample extension response text and the label extension response text, so as to obtain the initial large model.

According to embodiments of the present disclosure, the sample speech recognition feature is determined by processing the sample request speech using a speech recognition large model.

The training module includes a response text loss value determination sub-module and a training sub-module.

The response text loss value determination sub-module is used to determine a response text loss value based on the response text difference between the sample response text and the label response text.

The training sub-module is used to adjust a model parameter of the speech recognition large model and a model parameter of the initial large model based on the response text loss value and a request feature loss value to obtain the trained large model, where the request feature loss value represents a difference between the sample speech recognition feature and a preset label request text feature.

According to embodiments of the present disclosure, the label request text feature is determined by processing a sample request text using a preset large model, and the sample request speech is determined based on the sample request text.

According to embodiments of the present disclosure, the sample request speech includes sample request text audio information representing the sample request text, and sample environment audio information representing a speech environment sound.

According to embodiments of the present disclosure, a plurality of sample request speeches are provided, the plurality of sample request speeches have different sample speech attributes, and the sample speech attributes include one or more of: a timbre attribute, a speed attribute, a gender attribute, or an accent attribute.

FIG. 9 schematically shows a structure block diagram of an intelligent agent according to embodiments of the present disclosure.

In embodiments of the present disclosure, as shown in FIG. 9, an AI agent 900 may include an input module 910, a processing module 920, and an output module 930.

The input module 910 is used to receive input information.

The processing module 920 is used to determine a target task based on the input information received by the input module, determine a large model or an initial large model based on the target task, and call the large model to execute the interactive method based on the large model provided by embodiments of the present disclosure or call the initial large model to execute the method of training the large model provided by embodiments of the present disclosure, so as to obtain output information.

The output module 930 is used to output the output information obtained by the processing module.

According to embodiments of the present disclosure, the input module 910 is used for receiving or perceiving queries, requests, instructions, signals, or data from the outside world (such as users or external environments), and converting them into a format that the AI agent 900 may understand and process. The input module 910 is the primary link for the AI agent 900 to interact with the outside world, enabling the AI agent 900 to efficiently and accurately obtain necessary "sensory" information from the outside world and respond to such information.

In the example, the input module 910 may input the request speech or the sample request speech, the sample request speech feature, and the request speech feature described above.

In the example, the processing module 920 is the core support for the complex task handling ability of the AI agent 900. The processing module 920 may execute the interactive method based on the large model and the method of training the large model described above.

In the example, the performance of the processing module 920 may be closely related to the large model on which the AI agent 900 is based. In order to fully utilize the capabilities of the large model, the internal structure of the processing module 920 may be designed to be highly configurable and scalable to cope with various types of tasks and requests in real-world scenarios.

In the example, after the AI agent 900 acquires the request speech, the processing module 920 may use the speech recognition large model to process the request speech to obtain the speech recognition feature. The large model processes the speech recognition feature to obtain the response text, which is then transmitted to the output module 930.

It may be understood that although large models have excellent language comprehension and generation abilities, the tasks the large models may solve without the use of any tools are very limited like humans. When the AI agent 900 is given the ability to call tools, it may achieve tasks such as using calculators to perform mathematical operations, using Python to perform data analysis, and using search engines to complete weather forecasting.

In the example, the output module 930 may output the response text or the trained large model described above.

According to embodiments of the present disclosure, the AI agent 900 may simply and effectively enhance the level of intelligence, as well as improve flexibility and versatility.

According to embodiments of the present disclosure, the present disclosure further provides an electronic device, a readable storage medium and a computer program product.

According to embodiments of the present disclosure, the electronic device includes: at least one processor; and a memory communicatively connected to the at least one processor, where the memory stores instructions executable by the at least one processor, and the instructions, when executed by the at least one processor, cause the at least one processor to implement the method mentioned above.

According to embodiments of the present disclosure, the non-transitory computer-readable storage medium having computer instructions stored thereon is provided, where the computer instructions are configured to cause a computer to implement the method mentioned above.

According to embodiments of the present disclosure, the computer program product containing a computer program is provided, where the computer program, when executed by a processor, causes the processor to implement the method mentioned above.

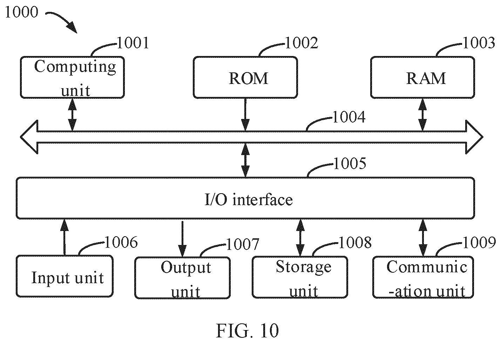

FIG. 10 shows a schematic block diagram of an exemplary electronic device for implementing the interactive method based on the large model and the method of training the large model according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the device 1000 may include a computing unit 1001, which may perform various appropriate actions and processing based on a computer program stored in a read-only memory (ROM) 1002 or a computer program loaded from a storage unit 1008 into a random access memory (RAM) 1003. Various programs and data required for the operation of the device 1000 may be stored in the RAM 1003. The computing unit 1001, the ROM 1002 and the RAM 1003 are connected to each other through a bus 1004. An input/output (I/O) interface 1005 is further connected to the bus 1004.

Various components in the device 1000, including an input unit 1006 such as a keyboard, a mouse, etc., an output unit 1007 such as various types of displays, speakers, etc., a storage unit 1008 such as a magnetic disk, an optical disk, etc., and a communication unit 1009 such as a network card, a modem, a wireless communication transceiver, etc., are connected to the I/O interface 1005. The communication unit 1009 allows the device 1000 to exchange information/data with other devices through a computer network such as the Internet and/or various telecommunication networks.

The computing unit 1001 may be various general-purpose and/or special-purpose processing components with processing and computing capabilities. Some examples of the computing unit 1001 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 1001 may perform the various methods and processes described above, such as the interactive method based on the large model and the method of training the large model. For example, in some embodiments, the interactive method based on the large model and the method of training the large model may be implemented as a computer software program that is tangibly contained on a machine-readable medium, such as a storage unit 1008. In some embodiments, part or all of a computer program may be loaded and/or installed on the device 1000 via the ROM 1002 and/or the communication unit 1009. When the computer program is loaded into the RAM 1003 and executed by the computing unit 1001, one or more steps of the interactive method based on the large model and the method of training the large model described above may be performed. Alternatively, in other embodiments, the computing unit 1001 may be used to perform the interactive method based on the large model and the method of training the large model in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices such as at least one of the apparatus of training a deep learning model, the apparatus of determining heat exchange characteristic data, the control apparatus based on heat exchange characteristic data, and the annealing apparatus, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be the cloud server, also referred to as the cloud computing server or the cloud host, which is the host product in the cloud computing service system to solve shortcomings of difficult management and weak business scalability in a conventional physical host and a VPS (Virtual Private Server) service. The server may also be a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. An interactive method based on a large model, comprising:
acquiring (S210) a request speech;
performing (S220) a speech recognition on the request speech to obtain a speech recognition feature representing a request semantics; and
processing (S230) the speech recognition feature using the large model to obtain a response text, wherein the response text comprises a plurality of response words arranged in sequence, a target response word among the plurality of response words is determined by processing the speech recognition feature and an associated response word feature using an attention fusion layer of the large model, and the associated response word feature is related to an associated response word arranged before the target response word.

2. The method according to claim 1, wherein the processing the speech recognition feature using the large model to obtain a response text comprises:
processing, using a text feature fusion layer, an initial associated response word feature representing the associated response word, so as to obtain the associated response word feature, wherein the large model comprises the text feature fusion layer;
processing the speech recognition feature and the associated response word feature using the attention fusion layer to obtain a target response word feature; and
determining the target response word based on the target response word feature.

3. The method according to claim 2, wherein the large model comprises N text feature fusion layers and N attention fusion layers, and N is an integer greater than 1;
wherein the processing the speech recognition feature and the associated response word feature using the attention fusion layer to obtain a target response word feature comprises:
processing, using an n^{th} attention fusion layer, the speech recognition feature and an n^{th} associated response word feature, so as to obtain an n^{th} intermediate fusion feature, wherein N≥n>1, the n^{th} associated response word feature is determined by processing an (n-1)^{th} intermediate fusion feature using an n^{th} text feature fusion layer, and a first associated response word feature is determined by processing the initial associated response word feature using a first text feature fusion layer; and
determining the target response word feature based on an N^{th} intermediate fusion feature in a case of n=N.

4. The method according to claim 1, wherein the performing a speech recognition on the request speech to obtain a speech recognition feature representing a request semantics comprises:
performing a feature extraction on the request speech to obtain an initial speech feature;
decoding the initial speech feature to obtain a plurality of initial decoding features, wherein the initial decoding feature represents a request word in the request speech; and
fusing the plurality of initial decoding features and the initial speech feature based on an attention mechanism to obtain the speech recognition feature; and
wherein the fusing the plurality of initial decoding features and the initial speech feature based on an attention mechanism to obtain the speech recognition feature comprises:
fusing the initial decoding feature and the initial speech feature based on the attention mechanism to obtain a request word audio feature corresponding to the request word;
performing a global feature fusion on a plurality of request word audio features to obtain an intermediate speech feature; and
fusing the intermediate speech feature and the plurality of initial decoding features based on the attention mechanism to obtain the speech recognition feature.

5. A method of training a large model, comprising:
acquiring (S510) a sample request speech and a label response text;
performing (S520) a speech recognition on the sample request speech to obtain a sample speech recognition feature;
processing (S530) the sample speech recognition feature using an initial large model to obtain a sample response text, wherein the sample response text comprises a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word; and
training (S540) the initial large model based on a response text difference between the sample response text and the label response text to obtain a trained large model.

6. The method according to claim 5, wherein the initial large model is determined by training an extended large model, and the extended large model is obtained by updating a network structure of a pre-trained basic large model based on an extended attention fusion layer;
wherein the basic large model comprises a multi-level basic feature fusion network, and the basic feature fusion network comprises cascaded basic text feature fusion layer and basic feed-forward layer;
wherein the extended large model comprises a multi-level extended feature fusion network, and the extended feature fusion network comprises cascaded basic text feature fusion layer, extended attention fusion layer, and basic feed-forward layer; and
wherein the initial large model is determined based on following training operations:
acquiring the extended large model, the pre-trained basic large model, a sample extension request text and a label extension response text;
processing the sample extension request text using the basic large model to obtain a sample extension request text feature;
processing the sample extension request text feature using the extended large model to obtain a sample extension response text; and
training the extended large model based on a difference between the sample extension response text and the label extension response text, so as to obtain the initial large model.

7. The method according to claim 5, wherein the sample speech recognition feature is determined by processing the sample request speech using a speech recognition large model;
wherein the training the initial large model based on a response text difference between the sample response text and the label response text to obtain a trained large model comprises:
determining a response text loss value based on the response text difference between the sample response text and the label response text; and
adjusting a model parameter of the speech recognition large model and a model parameter of the initial large model based on the response text loss value and a request feature loss value to obtain the trained large model, wherein the request feature loss value represents a difference between the sample speech recognition feature and a preset label request text feature; and
wherein the label request text feature is determined by processing a sample request text using a preset large model, and the sample request speech is determined based on the sample request text.

8. The method according to claim 7, wherein the sample request speech comprises sample request text audio information representing the sample request text, and sample environment audio information representing a speech environment sound.

9. The method according to claim 7, wherein a plurality of sample request speeches are provided, the plurality of sample request speeches have different sample speech attributes, and the sample speech attributes comprise one or more of:
a timbre attribute, a speed attribute, a gender attribute, or an accent attribute.

10. An interactive apparatus (700) based on a large model, comprising:
a first acquisition module (710) configured to acquire a request speech;
a first speech recognition module (720) configured to perform a speech recognition on the request speech to obtain a speech recognition feature representing a request semantics; and
a response text obtaining module (730) configured to process the speech recognition feature using the large model to obtain a response text, wherein the response text comprises a plurality of response words arranged in sequence, a target response word among the plurality of response words is determined by processing the speech recognition feature and an associated response word feature using an attention fusion layer of the large model, and the associated response word feature is related to an associated response word arranged before the target response word.

11. An apparatus (800) of training a large model, comprising:
a second acquisition module (810) configured to acquire a sample request speech and a label response text;
a second speech recognition module (820) configured to perform a speech recognition on the sample request speech to obtain a sample speech recognition feature;
a sample response text obtaining module (830) configured to process the sample speech recognition feature using an initial large model to obtain a sample response text, wherein the sample response text comprises a plurality of sample response words arranged in sequence, a sample target response word among the plurality of sample response words is determined by processing the sample speech recognition feature and a sample associated response word feature using an initial attention fusion layer of the initial large model, and the sample associated response word feature is related to an associated response word arranged before the sample target response word; and
a training module (840) configured to train the initial large model based on a response text difference between the sample response text and the label response text to obtain a trained large model.

12. An intelligent agent (900), comprising:
an input module (910) configured to receive input information;
a processing module (920) configured to determine a target task based on the input information received by the input module, determine a large model based on the target task, and call the large model to implement the method of any one of claims 1 to 4 or determine an initial large model based on the target task, and call the initial large model to implement the method of any one of claims 5 to 9, so as to obtain output information; and
an output module (930) configured to output the output information obtained by the processing module.

13. An electronic device (1000), comprising:
at least one processor; and
a memory communicatively connected to the at least one processor, wherein the memory stores instructions executable by the at least one processor, and the instructions, when executed by the at least one processor, are configured to cause the at least one processor to implement the method of any one of claims 1 to 9.

14. A non-transitory computer-readable storage medium having computer instructions stored thereon, wherein the computer instructions are configured to cause a computer to implement the method of any one of claims 1 to 9.

15. A computer program product containing a computer program, wherein the computer program, when executed by a processor, is configured to cause the processor to implement the method of any one of claims 1 to 9.
